# EUROPEAN PATENT APPLICATION

(11) **EP 4 622 276 A1**
(43) Date of publication of application: **24.09.2025**
(21) Application number: 23890701.8
(22) Date of filing: 10.11.2023
(51) Int. Cl.: H04N 21/44

(54) **PLAYBACK CONTROL METHOD AND APPARATUS FOR MULTIMEDIA FILE, AND DEVICE AND STORAGE MEDIUM**

(30) Priority: 14.11.2022 CN 202211419797
(71) Applicant: Beijing Zitiao Network Technology Co., Ltd., Beijing 100190 (CN)
(72) Inventor: ZHAO, Leihe, Beijing 100028 (CN); HONG, Chen, Beijing 100028 (CN); PENG, Zipei, Beijing 100028 (CN)
(74) Representative: Isarpatent
(86) International application number: PCT/CN2023/130965
(87) International publication number: WO 2024/104267

(57) **Abstract**

The present disclosure provides a playback control method and apparatus for multimedia files and a device, and a storage medium. The method comprises: when a switching request for switching from a first multimedia file to a target multimedia file to be played is received, firstly determining a type of the switching request, wherein the type of the switching request is used for presenting a manner of triggering the switching request, and then, determining target rendering containers based on the type of the switching request, and rendering the target multimedia file to be played based on the target rendering containers.

## Description

### CROSS-REFERENCE TO RELATED APPLICATION(S)

This application claims priority to Chinese Application No. 202211419797. X filed in Nov. 14, 2022, the disclosure of which is incorporated herein by reference in its entirety.

### FIELD

The present disclosure relates to the field of data processing, and more particularly relates to a playback control method for multimedia files, an apparatus, a device, and a storage medium.

### BACKGROUND

With the rapid development of multimedia information technology, the demand for interactive processing of multimedia files is getting higher and higher. For example, in the process of continuous playback of multimedia files, there are processing requirements such as playback control of multimedia files.

Therefore, how to realize the playback control of multimedia files is a technical problem that needs to be solved urgently at present.

### SUMMARY

In order to solve the above technical problems, an embodiment of the present disclosure provides a method for controlling the playback of multimedia files.

According to a first aspect, the present disclosure provides a playback control method of a multimedia file, the method comprising:
when a switching request for switching from the first multimedia file to the target multimedia file to be played is received, determining a type of the switching request; Wherein the type of the switching request is used for presenting a manner of triggering the switching request;
determining target rendering containers based on a type of the switching request; Wherein the target rendering containers includes a rendering container used in a process of switching from the first multimedia file to the target multimedia file to be played, and different types of the switching requests correspond to different numbers of the target rendering containers;
rendering the target multimedia file to be played based on the target rendering containers.

In an optional embodiment, the first multimedia file is rendered in a first rendering container, and the determining target rendering containers based on a type of the switching request includes:
determining the first rendering container as target rendering containers if it is determined that the type of the switching request belongs to a first switching type; Wherein the first switching type includes an automatic continue-to-play switching type and a control switching type;
accordingly, rendering the target multimedia file to be played based on the target rendering containers includes:
   scheduling a playback engine module to render the target multimedia file to be played in the first rendering container.

In an optional embodiment, the first multimedia file is rendered in a first rendering container, and the determining target rendering containers based on a type of the switching request includes:
determining both the first rendering container and the second rendering container as target rendering containers if it is determined that the type of the switching request belongs to a second switching type; Wherein the second switching type includes a sliding switching type, and the initial frame of the target multimedia file to be played is rendered in the second rendering container;
accordingly, rendering the target multimedia file to be played based on the target rendering containers includes:
   scheduling a playback engine module to render the target multimedia file to be played in the second rendering container.

In an optional embodiment, before rendering the target multimedia file to be played based on the target rendering containers, the step further includes:
determining whether a preloading condition for the second multimedia file is currently met based on preloading determination information corresponding to the second multimedia file; Wherein the second multimedia file is a next multimedia file adjacent to the first multimedia file, and the preload determination information includes at least one of current network status information, current device performance information, file information of the second multimedia file, and playback progress information of the first multimedia file;
Upon determining that a preloading condition for the second multimedia file is currently met, the scheduling loading module preloads the second multimedia file.

In an optional embodiment, before the scheduling playback engine module renders the target multimedia file to be played in the second rendering container, the scheduling playback engine module further includes:
Scheduling the playback engine module to render an initial frame in the target multimedia file to be played in the second rendering container; Wherein the target multimedia file to be played and the first multimedia file have a preset adjacent playback sequence relationship, the second rendering container is in a display standby state, and the display standby state is used for identifying that the corresponding rendering container is not displayed on a device image;
Accordingly, the scheduling playback engine module renders the target multimedia file to be played in the second rendering container, comprising:
   Updating the second rendering container from the display standby state to the display active state, and scheduling the playback engine module to render the target multimedia file to be played in the second rendering container based on the initial frame rendered in the second rendering container; Wherein the display activation state is used for identifying that the corresponding rendering container is displayed on the device image.

In an optional embodiment, after the scheduled playback engine module renders the target multimedia file to be played in the second rendering container, the scheduled playback engine module further includes:
Updating a display state of the first rendering container to a display standby state, and scheduling the playback engine module to render an initial frame in a third multimedia file in the first rendering container; Wherein the third multimedia file and the target multimedia file to be played have an adjacent playback sequence relationship.

In an optional embodiment, before rendering the target multimedia file to be played based on the target rendering containers, the step further includes:
Scheduling the playback engine module to render an initial frame in a fourth multimedia file in a third rendering container; Wherein the third rendering container is in the display standby state, and the fourth multimedia file and the first multimedia file have the preset adjacent playback sequence relationship;
Accordingly, before the scheduling playback engine module renders the target multimedia file to be played in the second rendering container, the scheduling playback engine module further includes:
   Scheduling the playback engine module to render an initial frame in a fifth multimedia file in the third rendering container; Wherein the fifth multimedia file and the target multimedia file to be played have an adjacent playback sequence relationship.

In an optional embodiment, the updating the second rendering container from the display standby state to the display active state includes:
Controlling a display window corresponding to the second rendering container to switch into a device image from a first preset direction;
Accordingly, the updating the display state of the first rendering container to a display standby state includes:
   Controlling a display window corresponding to the first rendering container to switch out of the device image from a second preset direction.

According to a second aspect, the present disclosure provides a multimedia file playback control device, the device comprising:
A first determining module configured to determine a type of the switching request when a switching request for switching from the first multimedia file to the target multimedia file to be played is received; Wherein the type of the switching request is used for presenting a manner of triggering the switching request;
A second determining module configured to determine target rendering containers based on a type of the switching request; Wherein the target rendering containers includes a rendering container used in a process of switching from the first multimedia file to the target multimedia file to be played, and different types of the switching requests correspond to different numbers of the target rendering containers;
A first rendering module configured to render the target multimedia file to be played based on the target rendering containers.

In a third aspect, the present disclosure provides a computer-readable storage medium having instructions stored therein, and when the instructions are executed on a terminal device, the terminal device implements the above-described method.

According to a fourth aspect, the present disclosure provides a multimedia file playback control apparatus, including a memory, a processor, and a computer program stored in the memory and executable on the processor, and when the processor executes the computer program, the method described above is implemented.

In a fifth aspect, the present disclosure provides a computer program product comprising a computer program/instruction that, when executed by a processor, implements the method described above.

### BRIEF DESCRIPTION OF THE DRAWINGS

The accompanying drawings herein, which are incorporated into and constitute a part of the specification, illustrate embodiments consistent with the present disclosure and, together with the specification, serve to explain the principles of the present disclosure.

In order to more clearly explain the technical solutions in the embodiments of the present disclosure or the prior art, the drawings that need to be used in the description of the embodiments or the prior art will be briefly introduced below, and it is obvious that other drawings can be obtained from these drawings without making creative labor for those skilled in the art.
FIG. 1 is a flowchart of a playback control method for multimedia files according to an embodiment of the present disclosure.
FIG. 2 is a flowchart of another playback control method for multimedia files according to an embodiment of the present disclosure.
FIG. 3 is a flowchart of another playback control method for multimedia files according to an embodiment of the present disclosure.
FIG. 4 is a schematic diagram of an arrangement of rendering containers according to an embodiment of the present disclosure.
FIG. 5 is a schematic diagram of another arrangement of rendering containers according to an embodiment of the present disclosure.
FIG. 6 is a schematic diagram of another arrangement of rendering containers according to an embodiment of the present disclosure.
FIG. 7 is a schematic structural diagram of a playback control system for multimedia files according to an embodiment of the present disclosure;
FIG. 8 is a schematic structural diagram of a playback control apparatus for multimedia files according to an embodiment of the present disclosure;
FIG. 9 is a schematic structural diagram of a playback control device for multimedia files according to an embodiment of the present disclosure.

### DETAILED DESCRIPTION OF EMBODIMENTS

In order to enable a clearer understanding of the above-described objects, features, and advantages of the present disclosure, embodiments of the present disclosure will be further described below. It is to be noted that the embodiments of the present disclosure and the features in the embodiments may be combined with each other without conflict.

Numerous specific details are set forth in the following description to facilitate a full understanding of the disclosure, but the disclosure may be practiced in other ways than those described herein; Obviously, the embodiments in the specification are only a part of the embodiments of the present disclosure, but not all the embodiments.

In order to implement playback control for multimedia files, an embodiment of the present disclosure provides a playback control method for multimedia files.

Specifically, when a switching request for switching from the first multimedia file to a target multimedia file to be played is received, a type of the switching request is first determined, wherein the type of the switching request is used for presenting a manner triggering the switching request is. Then, target rendering containers is determined based on the type of the switching request, and a target multimedia file to be played is rendered based on the target rendering containers. It can be seen that the embodiment of the present disclosure can realize the switching process of multimedia files by using different numbers of rendering containers for different types of switching requests, thereby realizing the playback control function for multimedia files.

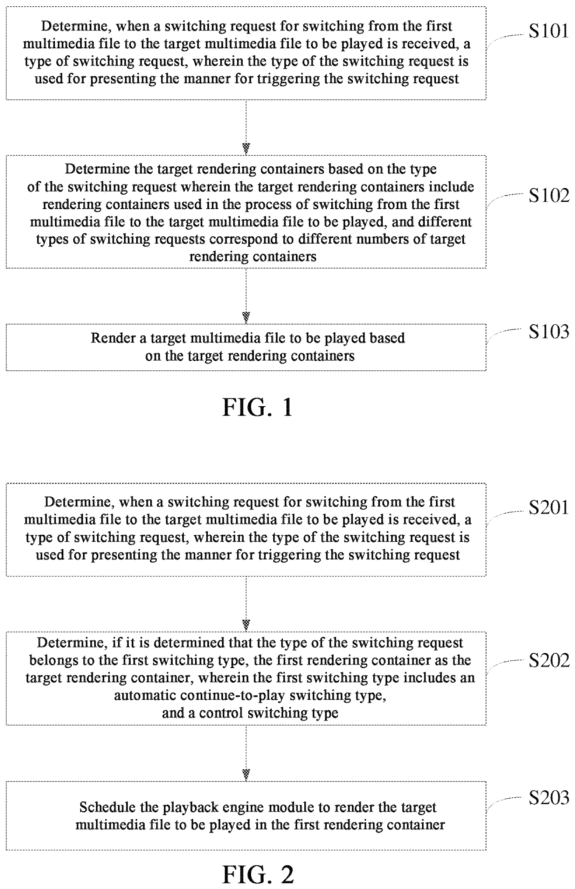

Based on this, an embodiment of the present disclosure provides a playback control method of a multimedia file, and referring to FIG. 1, which is a flowchart of a playback control method for multimedia files according to an embodiment of the present disclosure, the method comprises:
S101: determine, when a switching request for switching from the first multimedia file to the target multimedia file to be played is received, a type of switching request.

The type of the switching request is used for presenting the manner for triggering the switching request.

In an optional embodiment, the first multimedia file and the target multimedia file to be played may belong to the same multimedia content stream, such as two videos belonging to the same video stream.

The playback control method for multimedia files according to an embodiment of the present disclosure can be applied to a client having a multimedia file playback function, and the client can be deployed on a terminal such as a smartphone, a Tablet Personal Computer (Tablet PC), a notebook computer, or the like.

In an embodiment of the present disclosure, the first multimedia file may be any type of multimedia file, specifically, the first multimedia file may be a multimedia file including at least one content type among pictures (including moving pictures), audio, and video, for example, the first multimedia file may be a certain episode of a series, a certain song, or the like.

The target multimedia file to be played and the first multimedia file may belong to the same multimedia content stream, wherein the multimedia content stream may be composed of a plurality of predetermined multimedia files having a preset playback sequence relationship, for example, the multimedia content stream may be a mixed content stream including pictures, videos, audio, etc., and the video stream may be a series of N episodes, wherein the target multimedia file to be played and the first multimedia file may each correspond to one of the series of N episodes.

Specifically, the switching request for switching from the first multimedia file to the target multimedia file to be played may refer to an automatic continue-to-play request triggered when the first multimedia file is played to the end of the last frame, or may refer to a manual switching request for switching to the target multimedia file to be played during the playback of the first multimedia file.

In an optional embodiment, the automatic continue-to-play request triggered when the first multimedia file is played until the end of the last frame, and the type of the corresponding switching request is the automatic continue-to-play switching type.

In the embodiment of the present disclosure, it is applicable to a scene in which multimedia files are automatically and continuously played, specifically, when a switching request, that is triggered when the playback of the last frame in the first multimedia file is completed, is received, that is, when the automatic playback of the first multimedia file is completed and the playback of the next multimedia file is about to enter, the type of the switching request is determined, specifically, the automatic continue-to-play switching type.

Further, the triggering manner of the manual switching request for switching to the target multimedia file to be played during the playback of the first multimedia file may include a manner in which the switching request is triggered by a control and a manner in which the switching request is triggered by a sliding operation.

Here, in the manner in which the switching request is triggered by the sliding operation, the switching request may be realized by a preset sliding switching operation acting on the playback interface of the first multimedia file. The preset sliding switching operation may include at least one of a preset sliding switching operation down and a preset sliding switching operation up, and may be realized by acting on any position on the playback interface of the first multimedia file to trigger the preset sliding switching operation, specifically, for the preset sliding switching operation on the playback interface of the multimedia file, a sliding switching request of the target multimedia file to be switched from the first multimedia file may be triggered, and the type corresponding to the switching request is a sliding switching type.

In the manner in which the switching request is triggered by the control, the triggering operation for the preset switching control set on the playback interface of the first multimedia file may be realized. The preset switching control may include at least one of a preset downwards-sliding switching control, a preset upwards-siding switching control, and a preset target multimedia file switching control. Specifically, by triggering a click operation for a preset switching control set on a playback interface of the multimedia file, a switching request for switching from the first multimedia file to the target multimedia file to be played may be triggered, and a type corresponding to the switching request is a control switching type.

Specifically, assuming that the preset switching control is a preset downwards-sliding switching control, by clicking the preset downwards-sliding switching control, switching from the first multimedia file to playback of the next multimedia file adjacent to the first multimedia file can be triggered. Assuming that the preset switching control is a preset upwards-sliding switching control, by clicking the preset upwards-sliding switching control, it is possible to trigger playback from the first multimedia file to a previous multimedia file adjacent to the first multimedia file; Assuming that the preset switching control is a preset multimedia file switching control, by clicking the preset multimedia file switching control, it is possible to trigger playback from the first multimedia file to the target multimedia file, for example, by clicking the switching control of the fiftieth episode in the process of playing the first episode, it is possible to trigger playback from the first episode to the fiftieth episode.

S102: determining the target rendering containers based on the type of the switching request.
wherein the target rendering containers include rendering containers used in the process of switching from the first multimedia file to the target multimedia file to be played, and different types of switching requests correspond to different numbers of target rendering containers.

Specifically, the type of the switching request includes at least one of an automatic continue-to-play switching type, a control switching type, and a sliding switching type.

Accordingly, for the trigger mode of the automatic continue-to-play switching type, the control switching type, and the sliding switching type, see the description of step S 101.

In the embodiment of the present disclosure, when the switching request type is the automatic continue-to-play switching type and the control switching type, in order to avoid the problem of abnormal display of the playback image caused by switching the rendering container, the number of target rendering containers is set to one, that is, the target rendering containers only includes the corresponding rendering container when rendering the first multimedia file, and there is no need to switch the rendering container in the process of switching from the first multimedia file to the target multimedia file to be played.

When the switching request type is the sliding switching type, in order to ensure the switching effect of the multimedia files being continuously played in the switching process, the number of target rendering containers may be set to two, that is, the target rendering containers include a rendering container used for rendering the first multimedia file, hereinafter referred to as a first rendering container, and a rendering container for rendering the target multimedia file to be played, hereinafter referred to as a second rendering container.

Specifically, the specific description of determining the target rendering containers based on the type of the switching request refers to the following embodiments, and the embodiments of the present disclosure will not be repeatedly described herein.

S103: rendering a target multimedia file to be played based on the target rendering containers.

In an embodiment of the present disclosure, a playback control module may be deployed in a client having a multimedia file playback function, and the playback control module may render a target multimedia file to be played based on target rendering containers by scheduling a playback engine module.

Wherein the playback engine module is configured to receive a scheduling command and play the target multimedia file to be played indicated by the scheduling command in the rendering container indicated by the scheduling command.

Specifically, the director control module in the embodiment of the present disclosure may correspond to one or more rendering containers, and can schedule a playback engine module to control the playback of multimedia files in any one of the one or more rendering containers.

In the embodiment of the present disclosure, when the switching request type is the automatic broadcast switching type and the control switching type, the target rendering containers includes only the first rendering container used when rendering the first multimedia file, and thus, the playback directing control module can render the target multimedia file to be played in the first rendering container by scheduling the playback engine module.

Taking the switching request type as an automatic continue-to-play switching type as an example, when an automatic continue-to-play switching request of the first multimedia file played in the first rendering container is received, the playback engine module is scheduled to control the next multimedia file to be rendered in the first rendering container without switching the rendering container.

In addition, when the target multimedia file to be played is not loaded completely, the broadcast guidance control module may control the playback of the first multimedia file to pause and wait for the target multimedia file to be played to be loaded completely, and then schedule the playback engine module to start rendering the target multimedia file to be played in the first rendering container.

In another embodiment of the present disclosure, when the switching request type is the sliding switching type, the target rendering containers include a first rendering container used when rendering the first multimedia file and a second rendering container used for rendering the target multimedia file to be played. Therefore, when the sliding switching request for the first multimedia file played in the first rendering container is received, the playback engine module is scheduled to control the next multimedia file to be rendered in the second rendering container, switching of the rendering container is realized, and the switching animation effect of the sliding switching process is guaranteed.

In the playback control method of a multimedia file according to an embodiment of the present disclosure, when a switching request for switching from a first multimedia file to a target multimedia file to be played is received, a type of the switching request is first determined, wherein the type of the switching request is used for presenting a manner of triggering the switching request. Then, target rendering containers are determined based on the type of the switching request, and a target multimedia file to be played is rendered based on the target rendering containers. It can be seen that the embodiment of the present disclosure can realize the switching process of multimedia files by using different numbers of rendering containers for different types of switching requests, thereby realizing the playback control function for multimedia files.

Based on the above embodiment, an embodiment of the present disclosure further provides a method for controlling the playback of a multimedia file, and referring to FIG. 2, which is a flowchart of another method for controlling the playback of a multimedia file according to an embodiment of the present disclosure, the method comprising:
S201: determining, when a switching request for switching from the first multimedia file to the target multimedia file to be played is received, the type of switching request.

Wherein, the type of switching request is used for presenting the manner for triggering the switching request.

The first multimedia file is rendered in a first rendering container.

Specifically, the first rendering container may be any rendering container corresponding to the broadcast guide control module, and the first multimedia file is played in the first rendering container.

It should be noted that step S201 is implemented in the same manner as step S101 in the above-described embodiment, and step S101 can be described in the above-described embodiment.

S202: determining, if it is determined that the type of the switching request belongs to the first switching type, the first rendering container as the target rendering container.

The first switching type includes an automatic continue-to-play switching type and a control switching type.

Specifically, for the trigger mode of the automatic continue-to-play switching type and the control switching type, see the description of step S 101.

In the embodiment of the present disclosure, if it is determined that the type of the switching request is an automatic continue-to-play switching type, that is, corresponding to a scene in which the multimedia file is continuously automatically played, in order to avoid an abnormal display problem of the playback image caused by switching the rendering container during the continuous automatic playback of the multimedia file, the number of the target rendering containers may be set to one, that is, the target rendering container includes only the first rendering container corresponding to rendering the first multimedia file.

In the embodiment of the present disclosure, if it is determined that the type of the switching request is the control switching type, that is, it corresponds to a scene in which the user manually switches the multimedia file upward or downward through the control, and also in order to avoid the abnormal display problem of the playback image caused by switching the rendering container during the process of the user manually switching the multimedia file upward or downward through the control, the number of the target rendering containers may be set to one, that is, the target rendering containers includes only the first rendering container corresponding to the rendering of the first multimedia file.

S203: scheduling a playback engine module to render the target multimedia file to be played in the first rendering container.

In the embodiment of the present disclosure, after the first rendering container is determined as the target rendering container, the playback engine module is scheduled to render the target multimedia file to be played in the first rendering container, thereby avoiding the problem of abnormal display of the playback image caused by switching the rendering container.

In addition, not only the first rendering container but also other rendering containers may be deployed in the client. In order to ensure the sliding switching animation effect after the user triggers the sliding switching operation during the playback of each multimedia file, the embodiment of the present disclosure may also use the other rendering containers to render the initial frames of the previous and next multimedia files of the currently played multimedia file in advance during the playback of each multimedia file.

Taking the rendering of the target multimedia file to be played in the first rendering container as an example, the playback control module can schedule the playback engine module to render the initial frame in the next multimedia file adjacent to the target multimedia file to be played in the second rendering container and the initial frame in the previous multimedia file adjacent to the target multimedia file to be played in the third rendering container, so as to ensure the switching animation effect and the display effect when the target multimedia file to be played is switched to the adjacent previous or next multimedia file.

In the method for controlling the multimedia file playback according to the embodiment of the present disclosure, in a scene in which the multimedia file is automatically restarted and a scene in which the switching playback is triggered by clicking the switching control, the scheduling playback engine module controls the rendering of different multimedia files to the same rendering container, so that it is not necessary to switch the rendering container for the continuously played multimedia file, thereby avoiding the problem of abnormal display of the playback image caused by the switching of the rendering container.

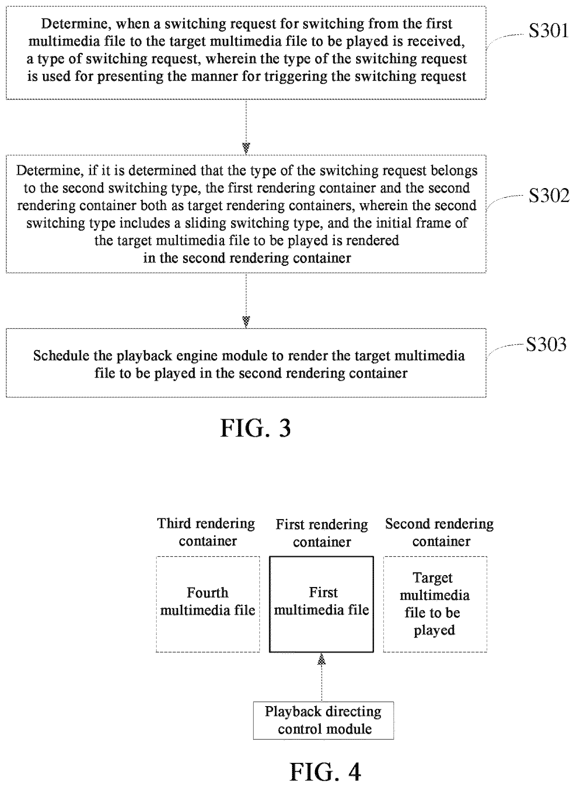

Based on the above embodiment, in order to realize the switching animation effect of the continuously played multimedia file in the sliding switching process and reduce the influence of abnormal display of the playing image caused by the switching of the multimedia file on the display effect, the embodiment of the present disclosure further provides a method for controlling the playing of the multimedia file. Referring to FIG. 3, it is a flowchart of another method for controlling the playing of the multimedia file according to an embodiment of the present disclosure, the method comprising:
S301: determining, when a switching request for switching from the first multimedia file to the target multimedia file to be played is received, the type of switching request.

Wherein the type of switching request is used for presenting the manner in which the switching request is triggered.

The first multimedia file is rendered in a first rendering container.

Specifically, the first rendering container may be any rendering container corresponding to the broadcast guide control module, and the first multimedia file is played in the first rendering container.

It should be noted that step S301 is implemented in the same manner as step S101 in the above-described embodiment, and step S101 can be described in the above-described embodiment.

S302: determining, if it is determined that the type of the switching request belongs to the second switching type, the first rendering container and the second rendering container both as target rendering containers.

Wherein the second switching type includes a sliding switching type, and the initial frame of the target multimedia file to be played is rendered in the second rendering container.

In the embodiment of the present disclosure, the triggering mode of the switching request of the sliding switching type may be triggered by a sliding switching operation (which may also be referred to as switching the next episode) acting on the playback interface of the first multimedia file. It may also be triggered by a slide-up toggle operation (which may also be referred to as switching previous episode) acting on the playback interface of the first multimedia file, the slide-down toggle operation may include a left slide operation or a slide-down operation, and the slide-up toggle operation may include a right slide operation or a slide-up operation.

In the embodiment of the present disclosure, if it is determined that the type of the switching request is a sliding switching type, that is, corresponding to a scene in which the user slides and switches multimedia files, in order to realize the switching animation effect of the continuously played multimedia files in the sliding switching process, the number of target rendering containers may be set to two, that is, the target rendering containers include a first rendering container and a second rendering container.

S303: scheduling the playback engine module to render the target multimedia file to be played in the second rendering container.

In an embodiment of the present disclosure, the directing control module corresponds to at least two rendering containers, including a first rendering container and a second rendering container, and can schedule a playback engine module to control the playback engine module to play multimedia files in any rendering container.

Before rendering the target multimedia file to be played in the second rendering container, that is, in the process of playing the first multimedia file, the director control module can schedule the playback engine module to pre-render the initial frame of the target multimedia file to be played in the second rendering container, so as to realize the switching animation effect of sliding switching from the first multimedia file to the target multimedia file to be played based on the initial frame of the target multimedia file to be played in the second rendering container when receiving the switching request of the sliding switching type.

It should be noted that the embodiment of the present disclosure may be applied to a scene in which a user slides to switch multimedia files, and specifically, the trigger method of a switching request of a slide switching type may include at least one of a trigger manner of sliding upwards to switch multimedia files and a trigger method of sliding downwards to switch multimedia files.

In an optional embodiment, before the scheduling playback engine module renders the target multimedia file to be played in the second rendering container, that is, in the process of playing the first multimedia file, the playback control module schedules the playback engine module to render the initial frame of the target multimedia file to be played in the second rendering container, and at this time, the second rendering container is in a display standby state, that is, it is not displayed on the device image.

After scheduling the playback engine module to render the target multimedia file to be played in the second rendering container, the second rendering container is updated from the display standby state to the display active state, that is, the display window corresponding to the second rendering container is displayed on the device image. In addition, the playback directing control module may specifically schedule the playback engine module to render the target multimedia file to be played in the second rendering container based on the initial frame rendered in the second rendering container.

Specifically, the preset adjacent playback sequence relationship between the target multimedia file to be played and the first multimedia file indicates that the target multimedia file to be played may be a next multimedia file or a previous multimedia file adjacent to the playback sequence of the first multimedia file.

In order to facilitate understanding, taking a scene in which the user manually triggers the left slide operation to switch to the next multimedia file as an example, after receiving the left slide operation acting on the playback interface of the first multimedia file, the playback control module schedules the broadcast engine module to display the initial frame in the rendering target to-be-broadcast multimedia file in the second rendering container on the device image, and controls the target multimedia file to be played to be played in the second rendering container after determining that the loading of the target multimedia file to be played is completed. Through the scheduling playback engine module to render two multimedia files with adjacent playback sequences in different rendering containers, and based on the initial frame of the next multimedia file rendered in advance, the switching animation effect of the two multimedia files is ensured, the display problems such as switching black image caused by the target multimedia file to be played not being ready are avoided, and the display effect of the user sliding to switch the next multimedia file is improved.

In addition, in order to further improve the display effect, in the playback scene in which the user triggers sliding to switch multimedia files, the animation switching effect can also be realized based on the initial frame of the pre-rendered target multimedia file to be played. In an optional embodiment, when a switching request for the sliding switching type of the first multimedia file is received, the display window corresponding to the second rendering container is controlled to switch into the device image from the first preset direction, and the display window corresponding to the first rendering container is controlled to switch out of the device image from the second preset direction. Wherein the initial frame of the target multimedia file to be played has been rendered in the second rendering container.

The first preset direction and the second preset direction may be any direction of the device image. In an optional embodiment, for a scene in which the left slide is switched to the next multimedia file, the first preset direction may be the right side of the device image, and correspondingly, the second preset direction may be the left side of the device image.

In an embodiment of the present disclosure, when a switching request for a sliding switching type for a first multimedia file is received, a display window corresponding to a second rendering container (corresponding to an initial frame of a target multimedia file to be played) may be controlled to switch into a device image from a first preset direction. And controlling the display window corresponding to the first rendering container (corresponding to the end frame picture of the first multimedia file) to switch out of the device image from the second preset direction, realizing the switching animation effect of smoothly transitioning from the first multimedia file to the playback interface of the next multimedia file, and improving the display effect.

Further, in order to avoid the consumption of system performance due to the creation of the rendering container, the embodiment of the present disclosure may rearrange the rendering container to realize reuse of the rendering container.

In an optional embodiment, after rendering the target multimedia file to be played in the second rendering container, the scheduling playback engine module updates the display state of the first rendering container to the display standby state, and schedules the playback engine module to render the initial frame of the third multimedia file in the first rendering container.

Wherein, the third multimedia file and the target multimedia file to be played have an adjacent playback sequence relationship, for example, the third multimedia file is a next multimedia file adjacent to the target multimedia file to be played.

Continuing to take a scene in which a user manually triggers a slide-to-the-left operation to switch to a next multimedia file as an example, when receiving a switching request for a slide switching type of the first multimedia file, after scheduling the playback engine module to render a target multimedia file to be played in a second rendering container, a display state of the first rendering container is updated to a display standby state, that is, the first rendering container is re-arranged to a position adjacent to the next rendering container of the second rendering container, and the playback engine module is scheduled to render the initial frame of the next multimedia file (hereinafter referred to as the third multimedia file) adjacent to the target multimedia file to be played in the first rendering container, so that when the sliding switching request for the target multimedia file to be played is received, the initial frame of the third multimedia file can be rendered in the first rendering container, and the switching animation effect of switching from the target multimedia file to be played to the third multimedia file can be realized. In addition, the scheduling playback engine module plays the third multimedia file in the first rendering container, which realizes the reuse of the rendering container and reduces the performance consumption of the system.

It should be noted that the scenario in which the user manually triggers the slide-to-the-right operation to switch to the previous multimedia file can refer to the above description, and the embodiments of the present disclosure will not be repeatedly described here.

Based on the contents of the above embodiments, for an application scenario in which a user manually triggers a sliding operation to switch to a target multimedia file to be played, an embodiment of the present disclosure further provides a playback control method for a multimedia file, in which the playback control module corresponds to three rendering containers, namely, a first rendering container, a second rendering container, and a third rendering container, and the playback control module can schedule a playback engine module to control the playback engine module to play the multimedia file in any one of the rendering containers.

The second rendering container and the third rendering container are respectively located on both sides of the first rendering container, and are used for rendering the previous and next multimedia files adjacent to the playback sequence of the first multimedia file in response to a switching request of the sliding switching type.

In order to facilitate understanding, as an example, the third rendering container is located on the left side of the first rendering container and the second rendering container is located on the right side of the first rendering container, and accordingly, the third rendering container is used for a switching request for a sliding switching type. A previous multimedia file (i.e., a fourth multimedia file) adjacent to the playback sequence of the first multimedia file is rendered, and the second rendering container is used for rendering a next multimedia file (i.e., a target multimedia file to be played) adjacent to the playback sequence of the first multimedia file in response to a switching request of the sliding switching type.

Referring to FIG. 4, there is a schematic diagram of an arrangement of a rendering container according to an embodiment of the present disclosure, in which, as shown in FIG. 4, a second rendering container is located on the right side of a first rendering container and is used for a switching request of a sliding switching type, and rendering a next multimedia file (i.e. a target multimedia file to be played) adjacent to the playing order of the first multimedia file, a third rendering container is located on the left side of the first rendering container and is used for a switching request for a sliding switching type, and rendering a previous multimedia file (i.e. a target multimedia file to be played) adjacent to the playback sequence of the first multimedia file.

When the first multimedia file is played in the first rendering container, both the second rendering container and the third rendering container belong to the standby state, and at the same time, in order to avoid the problem that black image occurs in the picture corresponding to the target multimedia file or the fourth multimedia file during the process of sliding switching of the first multimedia file to the target multimedia file or the fourth multimedia file, the initial frame of the target multimedia file to be played in the second rendering container and the initial frame of the fourth multimedia file to be played in the third rendering container can be rendered by scheduling the playback engine module.

Specifically, in the process of playing the first multimedia file, the playback directing control module schedules the broadcast engine module to render the initial frame of the target multimedia file to be played in the second rendering container, and to render the initial frame of the fourth multimedia file in the third rendering container. Wherein the second rendering container and the third rendering container are both in a display standby state, and the fourth multimedia file and the first multimedia file have a preset adjacent playback sequence relationship.

In order to facilitate understanding, embodiments of the present disclosure continue to describe a scene in which a user manually triggers a left slide operation to switch to the next multimedia file as an example.

In an embodiment of the present disclosure, when receiving a switching request for the sliding switching type of the first multimedia file, the scheduling playback engine module displays an initial frame in the rendering target to-be-broadcast multimedia file in the second rendering container on the device image, and at the same time, after the target multimedia file to be played is loaded, the playback engine module is scheduled to continue to play the target multimedia file to be played in the second rendering container. By scheduling the playback engine module to render two multimedia files with adjacent playback sequences in different rendering containers, the function of switching the playback of the previous or the next multimedia file through the sliding switching operation can be realized, and the switching animation effect of the picture can be guaranteed.

In addition, in order to avoid problems such as a black image appearing on the playback image corresponding to the first multimedia file when the target multimedia file to be played is switched back to the first multimedia file, it is necessary to update the state of the first rendering container to a display standby state, and schedule the playback engine module to render the initial frame in the first multimedia file in the first rendering container.

In an optional embodiment, when the switching request triggered by the sliding operation for the first multimedia file is received, the display window corresponding to the second rendering container is controlled to switch into the device image from the first preset direction, and the display window corresponding to the first rendering container is controlled to switch out of the device image from the second preset direction, and the display window corresponding to the first rendering container is controlled to switch out of the device image from the second preset direction.

The first preset direction and the second preset direction may be any direction of the device image. In an optional embodiment, for a scene in which it is switched to the next multimedia file by sliding to the left, the first preset direction may be the right side of the device image, and correspondingly, the second preset direction may be the left side of the device image.

In an embodiment of the present disclosure, when a switching request for a sliding switching type for a first multimedia file is received, that is, when a user manually triggers a sliding operation to switch to a next multimedia file, a display window corresponding to a second rendering container (that is, an initial frame image of a target multimedia file to be played) may be controlled to switch into a device image from a first preset direction. And controlling a display window corresponding to the first rendering container (i.e. a certain frame of the first multimedia file) to switch out of the device image from the second preset direction, realizing an switching animation effect of smoothly transitioning from the first multimedia file to the playback interface of the next multimedia file, and improving the display effect.

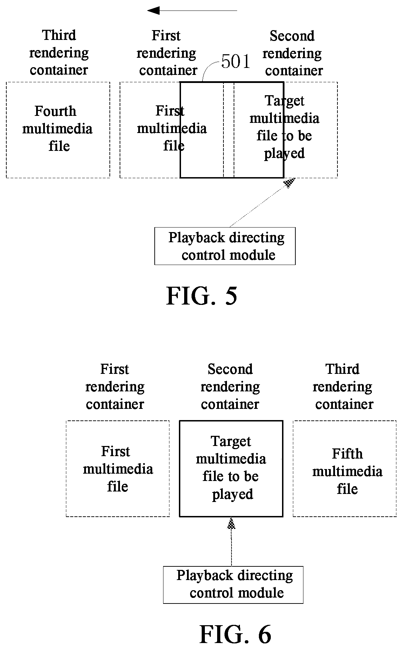

As shown in FIG. 5, when the user manually triggers a slide-to-the-left operation to switch from the first multimedia file to the target multimedia file to be played, correspondingly, the initial frame image of the target multimedia file to be played (that is, the display window corresponding to the second rendering container) is cut from the right side of the device image 501. A certain frame image of the first multimedia file (that is, a display window corresponding to the first rendering container) is switch out of from the left side of the device image 501, and an animation switching effect of smoothly transitioning from the image of the first multimedia file to the initial frame image of the next multimedia file is presented on the device image, thereby improving the display effect.

In addition, in order to avoid the consumption of system performance due to the creation of the rendering container, the embodiment of the present disclosure may further schedule the playback engine module to render the target multimedia file to be played in the second rendering container, and then rearrange the third rendering container to realize reuse of the rendering container.

In an optional embodiment, after the playback engine module is scheduled to render the target multimedia file to be played in the second rendering container, the playback engine module is scheduled to render the initial frame in the fifth multimedia file in the third rendering container.

Wherein, the fifth multimedia file and the target multimedia file to be played have a preset adjacent playback sequence relationship, and as shown in FIG. 5, the fifth multimedia file is a next multimedia file adjacent to the target multimedia file to be played.

In an embodiment of the present disclosure, after the target multimedia file to be played is played in the second rendering container, the third rendering container and the first rendering container are both on the left side of the second rendering container, and in order to realize reuse of the rendering container, the third rendering container may be arranged to the right side of the second rendering container, so that both left and right sides of the second rendering container are corresponding to the rendering containers for rendering the adjacent previous and next multimedia files of the target multimedia file to be played.

As shown in FIG. 6, in order to realize the reuse of the rendering container, on the basis of FIG. 5, the third rendering container is rearranged to the right side of the second rendering container so that when the target multimedia file to be played is played in the second rendering container, both the first rendering container and the third rendering container belong to the display standby state.

It should be noted that the scenario in which the user manually triggers the right slide operation to switch to the previous multimedia file can refer to the above description, and the embodiments of the present disclosure will not be repeatedly described here.

In the method for controlling the playback of multimedia files according to the embodiment of the present disclosure, in the sliding switching scene, by scheduling the playback engine module to play two multimedia files in adjacent playback sequences in different rendering containers, the function of switching between the playback of the previous or the next multimedia file by the sliding switching operation can be realized. In addition, based on the initial frame of the next multimedia file rendered in advance, the switching animation effect of the two multimedia files is ensured, and the display effect of the user sliding to switch the previous or the next multimedia file is improved.

In a practical application, in a scenario in which multimedia files are continuously played, in order to avoid problems such as waiting and stuck due to too slow loading of the next multimedia file to be played when the multimedia file is continuously played, the embodiment of the present disclosure may also preload each multimedia file.

In an optional embodiment, the playback control module may schedule the loading module to preload the second multimedia file, wherein the second multimedia file may be a next multimedia file adjacent to the first multimedia file being played.

In an optional embodiment, the scheduling loading module preloads the second multimedia file before the first multimedia file is played; In another optional embodiment, when the first multimedia file is played, the scheduling loading module preloads the second multimedia file.

In an optional embodiment, assuming that the target multimedia file to be played belongs to the second multimedia file, when a switching request for switching from the first multimedia file to the target multimedia file to be played is received, if the target multimedia file to be played is loaded, the target multimedia file to be played can be directly played, thereby avoiding problems such as waiting and stuck caused by too slow loading of the target multimedia file to be played, and improving the display effect.

When a switching request for switching from the first multimedia file to the target multimedia file to be played is received, if the target multimedia file to be played is not loaded completely, the playback engine module may be scheduled again to play the loaded target multimedia file to be played in the first rendering container by controlling the playback of the first multimedia file to be played and waiting for the target multimedia file to be played to be loaded completely.

In order to avoid waste of resources caused by excessive preloading, the embodiment of the present disclosure may further determine whether it is necessary to preload the target multimedia file to be played according to the preloading determination information corresponding to the second multimedia file.

In an optional embodiment, based on the preloading determination information corresponding to the second multimedia file, it is determined whether the preloading condition of the second multimedia file is currently met, and when it is determined that the preloading condition of the second multimedia file is currently met, the loading module is scheduled to preload the second multimedia file.

The preload determination information includes at least one of current network status information, current device performance information, file information of the second multimedia file, and playback progress information of the first multimedia file.

The current network status information may include whether the current network uses WIFI, speed information of the current network, delay information, and the like, specifically, the worse the current network status, such as the slower speed of the current network, the higher the demand for preloading.

The current device performance information may include CPU information, GPU information, memory information, etc. of the current device, and specifically, the lower the current device performance, such as a slower CPU running speed, the higher the preloading requirement.

The file information of the second multimedia file may include resolution information, bit rate information, and the like of the second multimedia file, and specifically, the more complex the second multimedia file is, the higher the resolution of the target multimedia file to be played, the higher the preloading requirement.

The playback progress information of the first multimedia file may be a percentage of the current playback duration of the first multimedia file to the total duration, and specifically, the closer the playback progress of the first multimedia file is to the end of playback, the higher the preloading requirement.

In an embodiment of the present disclosure, based on the current network status information, the current device performance information, the file information of the second multimedia file, and the playback progress information of the first multimedia file, it may be periodically triggered to comprehensively determine whether the preloading condition of the second multimedia file is currently met, and the preloading of the second multimedia file is started until it is determined whether the preloading condition of the second multimedia file is currently met.

In another embodiment of the present disclosure, the current network status information of the second multimedia file, the current device performance information, the file information of the second multimedia file, and the playback progress information of the first multimedia file may be input into the preloading model, and a preloading determination result may be output after processing of the preloading model, wherein the preloading determination result is used to reflect whether the preloading condition of the second multimedia file is currently met.

The preloaded model is a model obtained after training based on a large number of historical samples, and the training process of the model is not described in detail in the embodiments of the present disclosure.

It should be noted that the embodiment of the present disclosure may further determine whether the preloading condition of the second multimedia file is currently met based on one or more of the current network status information, the current device performance information, the file information of the second multimedia file, and the playback progress information of the first multimedia file. Specifically, with reference to the above description, the embodiment of the present disclosure will not be repeated here.

In the embodiment of the present disclosure, when it is determined that the preloading condition of the second multimedia file is currently met, the scheduling loading module preloads the second multimedia file, thereby avoiding resource waste caused by excessive preloading.

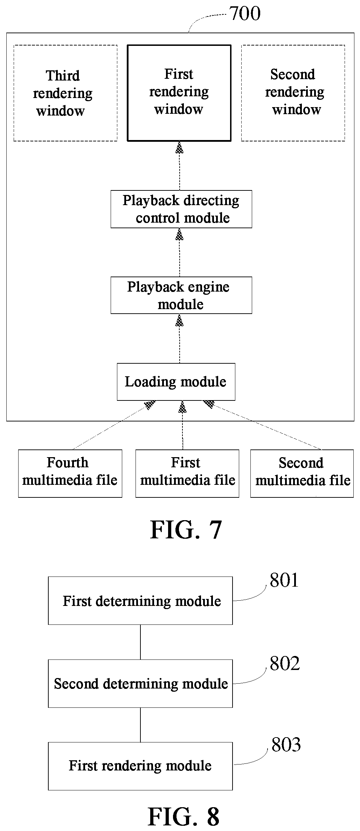

On the basis of the above embodiments, in order to further understand the playback control method for multimedia files provided by the present disclosure, the embodiment of the present disclosure further provides a playback control method for multimedia files applied to a multimedia file playback control system. Referring to FIG. 7, FIG. 7 is a schematic structural diagram of a multimedia file playback control system provided by the present embodiment. The multimedia file playback control system 700 includes a playback control module, a playback engine module, a loading module, and at least one rendering window.

Specifically, the director control module is configured to schedule the loading module to instruct the loading module to load any multimedia file; It is also used to schedule the playback engine module and control it to play the multimedia files loaded by the loading module in any rendering container.

Taking the multimedia file playback control system 700 including three rendering containers as an example, as shown in FIG. 7, the director control module schedules the playback engine module to play the first multimedia file in the first rendering container, and schedules the loading module to load the target multimedia file to be played and the fourth multimedia file to obtain the target multimedia file to be played and the fourth multimedia file, and schedules the playback engine module to render the loaded first frames of the target multimedia file to be played in the second rendering container and the third rendering container, respectively.

Assuming that the switching request of the sliding switching type is triggered by the left slide operation, when receiving the left slide operation for the first multimedia file played in the first rendering window, the playback control module updates the second rendering container from the standby state to the display activation state, that is, displays the display window corresponding to the second rendering container on the device image, and schedules the playback engine module to play the loaded target multimedia file in the second rendering container based on the initial frame rendered in the second rendering container.

In addition, in order to avoid problems such as a black image appearing on a playback image corresponding to the first multimedia file when the target multimedia file to be played is switched back to the first multimedia file, the first rendering container may be multiplexed, the state of the first rendering container may be updated to a display standby state, and the playback engine module may be scheduled to render the initial frame in the first multimedia file in the first rendering container.

In addition, in order to avoid the consumption of system performance due to the creation of the rendering container, the third rendering container can be rearranged to the right side of the second rendering container by the broadcast guidance control module, and the playback engine module can be scheduled to render the initial frame of the fifth multimedia file in the third rendering container, so that when the target multimedia file is played in the second rendering container, both the first rendering container and the third rendering container belong to the standby state.

Based on the state of the multimedia file playback control system 700 in FIG. 7, the playback directing control module may preload the subsequent multimedia file according to the preload determination information corresponding to the first multimedia file. When the type of the switching request is an automatic continue-to-play switching type or a control switching type, the playback directing control module may schedule the playback engine module to control the playback of the preloaded multimedia file to the first rendering window, that is, the continuous playback of the multimedia file is realized without switching the rendering window.

Based on the above embodiment of the method, the present disclosure further provides a multimedia file playback control device. Referring to FIG. 8, which is a schematic structural diagram of a multimedia file playback control device according to the embodiment of the present disclosure, the device comprising:
The first determining module 801 is configured to determine a type of the switching request when a switching request for switching from the first multimedia file to the target multimedia file to be played is received; Wherein the type of the switching request is used for presenting a manner of triggering the switching request;
A second determination module 802, configured to determine target rendering containers based on a type of the switching request; Wherein the target rendering containers includes a rendering container used in a process of switching from the first multimedia file to the target multimedia file to be played, and different types of the switching requests correspond to different numbers of the target rendering containers;
The first rendering module 803 is configured to render the target multimedia file to be played based on the target rendering containers.

In an optional embodiment, the first multimedia file is rendered in a first rendering container, and the second determination module is specifically configured to:
Determining the first rendering container as target rendering containers if it is determined that the type of the switching request belongs to a first switching type; Wherein the first switching type includes an automatic continue-to-play switching type and a control switching type;
Accordingly, the first rendering module is configured to:
   Scheduling a playback engine module to render the target multimedia file to be played in the first rendering container.

In an optional embodiment, the first multimedia file is rendered in a first rendering container, and the second determination module is specifically configured to:
Determining both the first rendering container and the second rendering container as target rendering containers if it is determined that the type of the switching request belongs to a second switching type; Wherein the second switching type includes a sliding switching type, and the initial frame of the target multimedia file to be played is rendered in the second rendering container;
Accordingly, the first rendering module is specifically configured to:
   Scheduling a playback engine module to render the target multimedia file to be played in the second rendering container.

In an optional embodiment, the apparatus further comprises:
A third determining module, configured to determine whether a preloading condition for the second multimedia file is currently met based on preloading determination information corresponding to the second multimedia file; Wherein the second multimedia file is a next multimedia file adjacent to the first multimedia file, and the preload determination information includes at least one of current network status information, current device performance information, file information of the second multimedia file, and playback progress information of the first multimedia file;
A fourth determining module configured to schedule the loading module to preload the second multimedia file when determining that the preloading condition for the second multimedia file is currently met.

In an optional embodiment, the apparatus further comprises:
A second rendering module configured to schedule the playback engine module to render an initial frame in the target multimedia file to be played in the second rendering container; Wherein the target multimedia file to be played and the first multimedia file have a preset adjacent playback sequence relationship, the second rendering container is in a display standby state, and the display standby state is used for identifying that the corresponding rendering container is not displayed on a device image;
Accordingly, the first rendering module is specifically configured to:
   Updating the second rendering container from the display standby state to the display active state, and scheduling the playback engine module to render the target multimedia file to be played in the second rendering container based on the initial frame rendered in the second rendering container; Wherein the display activation state is used for identifying that the corresponding rendering container is displayed on the device image.

In an optional embodiment, the apparatus further comprises:
An update module, configured to update a display state of the first rendering container to a display standby state, and schedule the playback engine module to render an initial frame in a third multimedia file in the first rendering container; Wherein the third multimedia file and the target multimedia file to be played have an adjacent playback sequence relationship.

In an optional embodiment, the apparatus further comprises:
A third rendering module configured to schedule the playback engine module to render an initial frame in a fourth multimedia file in a third rendering container; Wherein the third rendering container is in the display standby state, and the fourth multimedia file and the first multimedia file have the preset adjacent playback sequence relationship;
Accordingly, the apparatus further comprises:
   A fourth rendering module configured to schedule the playback engine module to render an initial frame in a fifth multimedia file in the third rendering container; Wherein the fifth multimedia file and the target multimedia file to be played have an adjacent playback sequence relationship.

In an optional embodiment, the first rendering module is specifically configured to:
Controlling a display window corresponding to the second rendering container to switch into a device image from a first preset direction;
Accordingly, the update module is specifically configured to:
   Controlling a display window corresponding to the first rendering container to switch out of the device image from a second preset direction.

In the multimedia file playback control apparatus according to the embodiment of the present disclosure, when a switching request for switching from the first multimedia file to the target multimedia file to be played is received, a type of the switching request is first determined, wherein the type of the switching request is used for presenting a manner of triggering the switching request. Then, target rendering containers is determined based on the type of the switching request, and a target multimedia file to be played is rendered based on the target rendering containers. It can be seen that the embodiment of the present disclosure can realize the switching process of multimedia files by using different numbers of rendering containers for different types of switching requests, thereby realizing the playback control function for multimedia files.

In addition to the above-described method and apparatus, an embodiment of the present disclosure further provides a computer-readable storage medium, in which an instruction is stored, and when the instruction is executed on a terminal device, the terminal device implements the playback control method of a multimedia file according to the embodiment of the present disclosure.

Embodiments of the present disclosure also provide a computer program product, wherein the computer program product includes a computer program/instruction, and when the computer program/instruction is executed by a processor, the method for controlling playback of a multimedia file according to the embodiment of the present disclosure is implemented.

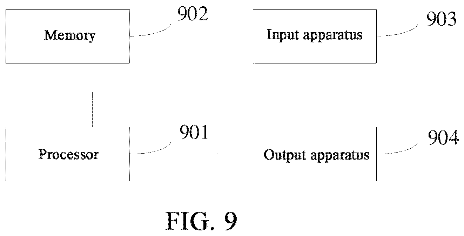

In addition, an embodiment of the present disclosure further provides a multimedia file playback control device, which may include:
A processor 901, a memory 902, an input device 903, and an output device 904. The number of processors 901 in the playback control apparatus of multimedia files may be one or more, and one processor is taken as an example in FIG. 9. In some embodiments of the present disclosure, the processor 901, the memory 902, the input device 903, and the output device 904 may be connected by a bus or other means, and the connection by a bus is exemplified in FIG. 9.

The memory 902 may be used to store software programs and modules, and the processor 901 executes various functional applications and data processing of the playback control apparatus of the multimedia file by running the software programs and modules stored in the memory 902. The memory 902 may mainly include a program storage area and a data storage area, where the program storage area may store an operating system, an application program required for at least one function, and the like. In addition, the memory 902 may include high-speed random access memory, and may also include non-volatile memory, such as at least one magnetic disk storage device, flash memory device, or other volatile solid state storage device. The input device 903 can be used to receive input numeric or character information and generate signal input related to user setting and function control of the playback control device of the multimedia file.

Specifically, in the present embodiment, the processor 901 loads executable files corresponding to processes of one or more application programs into the memory 902 according to the following instructions, and the processor 901 runs the application programs stored in the memory 902, thereby realizing various functions of the multimedia file playback control device described above.

An embodiment of the present disclosure provides a playback control method of a multimedia file, wherein, when a switching request for switching from a first multimedia file to a target multimedia file to be played is received, a type of the switching request is first determined, wherein the type of the switching request is used for presenting a mode of triggering the switching request. Then, target rendering containers is determined based on the type of the switching request, and a target multimedia file to be played is rendered based on the target rendering containers. It can be seen that the embodiment of the present disclosure can realize the switching process of multimedia files by using different numbers of rendering containers for different types of switching requests, thereby realizing the playback control function for multimedia files.

It should be noted that, herein, relational terms such as "first" and "second" are used merely to distinguish one entity or operation from another entity or operation, and do not necessarily require or imply that any such actual relationship or order exists between the entities or operations. Moreover, the terms "comprising," "comprising," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element defined by the statement "comprising a" does not preclude the presence of additional identical elements in a process, method, article, or apparatus comprising the element.

The foregoing is merely a specific embodiment of the present disclosure to enable those skilled in the art to understand or implement the present disclosure. Various modifications to these embodiments will be apparent to those skilled in the art, and the general principles defined herein may be implemented in other embodiments without departing from the spirit or scope of the present disclosure. Accordingly, the present disclosure is not to be limited to the embodiments described herein, but is to be accorded the widest scope consistent with the principles and novel features disclosed herein.

## Claims

1. A playback control method for multimedia files, the method comprising:
determining, in response to receiving a switching request for switching from the first multimedia file to a target multimedia file to be played, a type of the switching request; wherein the type of the switching request is used for presenting a manner of triggering the switching request;
determining target rendering containers based on the type of the switching request; wherein the target rendering containers include a rendering container used in a process of switching from the first multimedia file to the target multimedia file to be played, and different types of the switching requests correspond to different numbers of the target rendering containers;
rendering the target multimedia file to be played based on the target rendering containers.

2. The method of claim 1, wherein the first multimedia file is rendered in a first rendering container, and determining the target rendering container based on the type of the switching request comprises:
determining, in response to determining the type of the switching request belongs to a first switching type, the first rendering container as the target rendering containers; wherein the first switching type includes an automatic continue-to-play switching type and a control switching type;
wherein, accordingly, rendering the target multimedia file to be played based on the target rendering containers comprises:
scheduling a playback engine module to render the target multimedia file to be played in the first rendering container.

3. The method of claim 1, wherein the first multimedia file is rendered in a first rendering container, and determining the target rendering container based on the type of the switching request comprises:
determining, in response to determining that the type of the switching request belongs to a second switching type, both a first rendering container and a second rendering container as the target rendering containers; wherein the second switching type includes a sliding switching type, and an initial frame of the target multimedia file to be played is rendered in the second rendering container;
rendering the target multimedia file to be played based on the target rendering containers includes:
scheduling a playback engine module to render the target multimedia file to be played in the second rendering container.

4. The method of any of claims 1-3, wherein, before rendering the target multimedia file to be played based on the target rendering containers, the method further comprises:
determining, based on preloading determination information corresponding to a second multimedia file, whether a preloading condition for the second multimedia file is currently met; wherein the second multimedia file is a next multimedia file adjacent to the first multimedia file, and the preload determination information includes at least one of: current network status information, current device performance information, file information of the second multimedia file, and playback progress information of the first multimedia file;
upon determining that a preloading condition for the second multimedia file is currently met, scheduling a loading module to preload the second multimedia file.

5. That method of claim 3, wherein before scheduling the playback engine module to render the target multimedia file to be played in the second rendering container, the method further comprises:
scheduling the playback engine module to render an initial frame in the target multimedia file to be played in the second rendering container; wherein the target multimedia file to be played and the first multimedia file have a preset adjacent playback sequence relationship, the second rendering container is in a display standby state, and the display standby state is used for identifying that the corresponding rendering container is not displayed on a device image;
wherein, accordingly, scheduling the playback engine module to render the target multimedia file to be played in the second rendering container, comprising:
updating the second rendering container from the display standby state to the display active state, and scheduling the playback engine module to render the target multimedia file to be played in the second rendering container based on the initial frame rendered in the second rendering container; wherein the display activation state is used for identifying that the corresponding rendering container is displayed on the device image.

6. The method of claim 5, wherein, after scheduling the playback engine module to render the target multimedia file to be played in the second rendering container, the method further comprises:
updating a display state of the first rendering container to a display standby state, and scheduling the playback engine module to render an initial frame in a third multimedia file in the first rendering container; wherein the third multimedia file and the target multimedia file to be played have an adjacent playback sequence relationship.

7. The method of claim 5 or 6, wherein before rendering the target multimedia file to be played based on the target rendering containers, the method further comprises:
scheduling the playback engine module to render an initial frame in a fourth multimedia file in a third rendering container; wherein the third rendering container is in the display standby state, and the fourth multimedia file and the first multimedia file have the preset adjacent playback sequence relationship;
wherein, accordingly, before scheduling the playback engine module to render the target multimedia file to be played in the second rendering container, the method further comprises:
scheduling the playback engine module to render an initial frame in a fifth multimedia file in the third rendering container; wherein the fifth multimedia file and the target multimedia file to be played have an adjacent playback sequence relationship.

8. The method of claim 6, wherein updating the second rendering container from the display standby state to the display active state comprises:
controlling a display window corresponding to the second rendering container to switch into a device image from a first preset direction;
wherein, accordingly, updating the display state of the first rendering container to the display standby state comprises:
controlling a display window corresponding to the first rendering container to switch out of the device image from a second preset direction.

9. A playback control apparatus for multimedia files, comprising:
a first determining module configured to determine a type of the switching request in response to receiving a switching request for switching from the first multimedia file to the target multimedia file to be played; wherein the type of the switching request is used for presenting a manner of triggering the switching request;
a second determining module configured to determine target rendering containers based on the type of the switching request; wherein the target rendering containers include a rendering container used in a process of switching from the first multimedia file to the target multimedia file to be played, and different types of the switching requests correspond to different numbers of the target rendering containers;
a first rendering module configured to render the target multimedia file to be played based on the target rendering containers.

10. A computer-readable storage medium storing instructions, wherein when the instructions are executed on a terminal device, the terminal device is caused to implement the method of any of claims 1-8.

11. A playback control device for multimedia files, comprising: a memory, a processor, and a computer program stored on the memory and executable on the processor, wherein the processor implements the method according to any of claims 1 to 8 when executing the computer program.
